# EUROPEAN PATENT APPLICATION

(11) **EP 4 621 197 A1**
(43) Date of publication of application: **24.09.2025**
(21) Application number: 25158594.9
(22) Date of filing: 18.02.2025
(51) Int. Cl.: F02B 19/10, F02D 19/06, F02D 41/00

(54) **AMMONIA MIXED COMBUSTION ENGINE**

(30) Priority: 18.03.2024 JP 2024042185
(71) Applicant: Yanmar Holdings Co., Ltd., Osaka-shi, Osaka (JP)
(72) Inventor: HIRAOKA, Kenji, Osaka (JP); TOSHINAGA, Kazuteru, Osaka (JP); KAMINO, Takafumi, Osaka (JP)
(74) Representative: Novagraaf International SA

(57) **Abstract**

[Problem] To provide an ammonia mixed combustion engine capable of improving exhaust gas property by appropriately mixing and combusting ammonia and hydrocarbon-based liquid fuel.

[Solution] An ammonia mixed combustion engine 1 that is operated by combusting ammonia and hydrocarbon-based liquid fuel includes a main combustion chamber 20, an auxiliary combustion chamber 21 that communicates with the main combustion chamber 20, and a fuel supply device 14 that supplies ammonia and liquid fuel to the auxiliary combustion chamber 21. The fuel supply device 14 includes an ammonia injector 27 for supplying ammonia and a liquid fuel injector 28 for supplying hydrocarbon-based liquid fuel as separate bodies.

## Description

### TECHNICAL FIELD

The present invention relates to an ammonia mixed combustion engine that is operated by combusting ammonia and a hydrocarbon-based liquid fuel.

### BACKGROUND ART

Conventionally, engines include an ammonia mixed combustion engine that is operated by combusting ammonia and a hydrocarbon-based liquid fuel such as light oil.

For example, Patent Document 1 discloses a large turbocharged two stroke uniflow crosshead dual fuel internal combustion engine having an Otto cycle mode in which the engine is operated with first fuel such as ammonia and a fuel oil for ignition of the first fuel, and a diesel cycle mode in which the engine is operated with only the fuel oil. The engine includes a fuel introduction valve disposed in a cylinder cover for introducing the first fuel during the stroke of the piston from the bottom dead center to the top dead center, a fuel injection valve disposed in the cylinder cover or the cylinder liner for injecting fuel oil when the piston is at or near the top dead center, and a pilot ignition auxiliary chamber disposed in the cylinder cover or the cylinder liner and having an auxiliary chamber port opening into the combustion chamber in which the pilot ignition auxiliary chamber ignites a gas mixture of the first fuel and a scavenging gas in the combustion chamber with the fuel oil introduced into the auxiliary chamber.

### PRIOR ART DOCUMENT

### PATENT DOCUMENT

Patent Document 1: Japanese Patent No. 7329713

### SUMMARY OF INVENTION

### TECHNICAL PROBLEM

A conventional engine such as that disclosed in Patent Document 1 includes a fuel introduction valve for ammonia, a fuel injection valve for a fuel oil, and a pilot ignition auxiliary chamber, and is configured so that, during operation of the engine in the Otto cycle mode, the fuel oil is introduced into the pilot ignition auxiliary chamber by the fuel injection valve, and first fuel such as ammonia is supplied to the combustion chamber by the fuel introduction valve. However, since the supply of the first fuel to the combustion chamber and the supply of the fuel oil to the pilot ignition auxiliary chamber are separately performed, it is not possible to form a premixed gas in which the first fuel and the fuel oil are uniformly mixed, the fuel combusts locally and violently in the combustion chamber, a large amount of particulate matter (PM), nitrogen oxide (NOx), or the like is discharged, and the exhaust gas property may deteriorate.

The object of the present invention is to provide an ammonia mixed combustion engine capable of improving exhaust gas property by properly mixing and combusting ammonia and hydrocarbon-based liquid fuel.

### SOLUTION TO PROBLEM

In order to solve the above problems, an ammonia mixed combustion engine of the present invention is an ammonia mixed combustion engine that is operated by combusting ammonia and a hydrocarbon-based liquid fuel, the ammonia mixed combustion engine including a main combustion chamber, an auxiliary combustion chamber that communicates with the main combustion chamber, and a fuel supply device that supplies the ammonia and the liquid fuel to the auxiliary combustion chamber.

### ADVANTAGEOUS EFFECTS OF INVENTION

According to the present invention, there is provided an ammonia mixed combustion engine capable of improving exhaust gas property by appropriately mixing and combusting ammonia and hydrocarbon-based liquid fuel.

### BRIEF DESCRIPTION OF DRAWINGS

FIG. 1 is a schematic diagram showing an ammonia mixed combustion engine according to an embodiment of the present invention.
FIG. 2 is a graph showing an example of the relationship between excess air ratio of hydrogen combusted in the ammonia mixed combustion engine and nitrogen oxides generated in the exhaust gas.
FIG. 3 is a graph showing a map of a generation region of NO + NO₂ generated by combustion and an appearance region of unburned NH₃ in a relationship between an equivalence ratio of ammonia in a gas mixture supplied to an auxiliary combustion chamber in the ammonia mixed combustion engine and a combustion temperature of ammonia, and further showing a combustion temperature of ammonia when the gas mixture is combusted.

### DESCRIPTION OF EMBODIMENTS

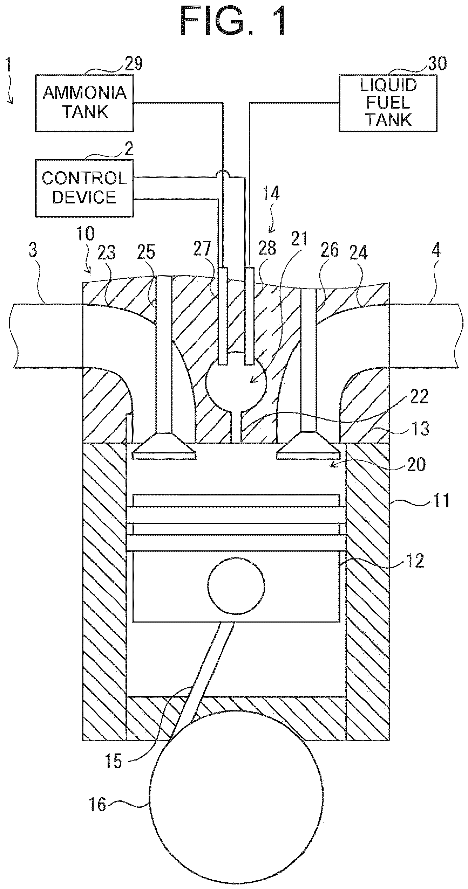

An ammonia mixed combustion engine 1 according to an embodiment of the present invention will be described with reference to the drawings. The ammonia mixed combustion engine 1 (engine) is operated by combusting ammonia and hydrocarbon-based liquid fuel such as light oil. Although the ammonia mixed combustion engine 1 is configured to include a plurality of cylinders 10 in a cylinder block (not shown), only one cylinder 10 is shown in FIG. 1. As shown in FIG. 1, each of the cylinders 10 includes a cylinder body 11, a piston 12, a cylinder head 13, and a fuel supply device 14.

The cylinder body 11 is, for example, formed to have a tubular shape in the cylinder block, the piston 12 is slidably accommodated in the cylinder body 11, and the cylinder head 13 is attached to the upper side of the cylinder body 11.

A main combustion chamber 20 is formed between the piston 12 and the cylinder head 13 inside the cylinder body 11, and an auxiliary combustion chamber 21 that communicates with the main combustion chamber 20 through an auxiliary chamber port 22 is formed inside the lower part of the cylinder head 13.

A crankshaft 16 is coupled to the piston 12 via a connecting rod 15 below the cylinder body 11, and reciprocating motion of the piston 12 is converted into rotary motion of the crankshaft 16 via the connecting rod 15.

Further, the cylinder head 13 has an intake port 23 and an exhaust port 24 that communicate with the main combustion chamber 20 of the cylinder body 11, and is provided with an intake valve 25 and an exhaust valve 26 that respectively open and close the intake port 23 and the exhaust port 24 with respect to the main combustion chamber 20.

The intake port 23 is connected to an intake passage 3 and introduces air supplied from the intake passage 3 to the main combustion chamber 20, and the exhaust port 24 is connected to an exhaust passage 4 and discharges exhaust gas generated in the main combustion chamber 20 to the exhaust passage 4. By opening the intake valve 25, intake air can be taken into the main combustion chamber 20 via the intake port 23, while by opening the exhaust valve 26, exhaust gas generated in the main combustion chamber 20 can be exhausted via the exhaust port 24.

The fuel supply device 14 separately supplies ammonia and hydrocarbon-based liquid fuel to the auxiliary combustion chamber 21, and generates a first gas mixture corresponding to the ammonia and the liquid fuel in the auxiliary combustion chamber 21. In the fuel supply device 14, a control device 2 controls a supply pressure (injection pressure), a supply timing (injection timing), a supply period (injection period), and the like of the ammonia or the liquid fuel to the auxiliary combustion chamber 21.

The control device 2 is a computer such as an engine control unit (ECU) that controls the operation of the engine 1, includes a CPU, a ROM, a RAM, and the like, and is configured to control each part of the engine 1. The control device 2 may store various programs for controlling the engine 1, and control the engine 1 by reading and executing the programs.

For example, the fuel supply device 14 includes an ammonia injector 27 connected to an ammonia tank 29 containing ammonia, and a liquid fuel injector 28 connected to a liquid fuel tank 30 containing hydrocarbon-based liquid fuel.

For example, in a state where air is supplied from the main combustion chamber 20 into the auxiliary combustion chamber 21 via the auxiliary chamber port 22, the fuel supply device 14 injects and supplies ammonia into the auxiliary combustion chamber 21 by the ammonia injector 27, and generates a first gas mixture of ammonia and air in the auxiliary combustion chamber 21. Specifically, in the intake stroke of the combustion cycle, the engine 1 introduces air from the intake passage 3 to the main combustion chamber 20 when the piston 12 is lowered toward the bottom dead center in a state where the intake port 23 is opened and the exhaust port 24 is closed. Thereafter, in the compression stroke of the combustion cycle, in a state where the intake port 23 and the exhaust port 24 are closed, the fuel supply device 14 supplies ammonia to the auxiliary combustion chamber 21 by the ammonia injector 27 before the piston 12 reaches the top dead center.

The fuel supply device 14 supplies ammonia to the auxiliary combustion chamber 21 so that the mixed combustion rate of ammonia in the auxiliary combustion chamber 21 becomes relatively high. At this time, the fuel supply device 14 sets the supply amount of ammonia (for example, the supply pressure, the supply timing, and the supply period) so that the ammonia of the first gas mixture generated in the auxiliary combustion chamber 21 becomes rich (fuel is excessive with respect to air). For example, the fuel supply device 14 supplies ammonia to the auxiliary combustion chamber 21 so that the excess air ratio of ammonia becomes 0.4 to 0.7.

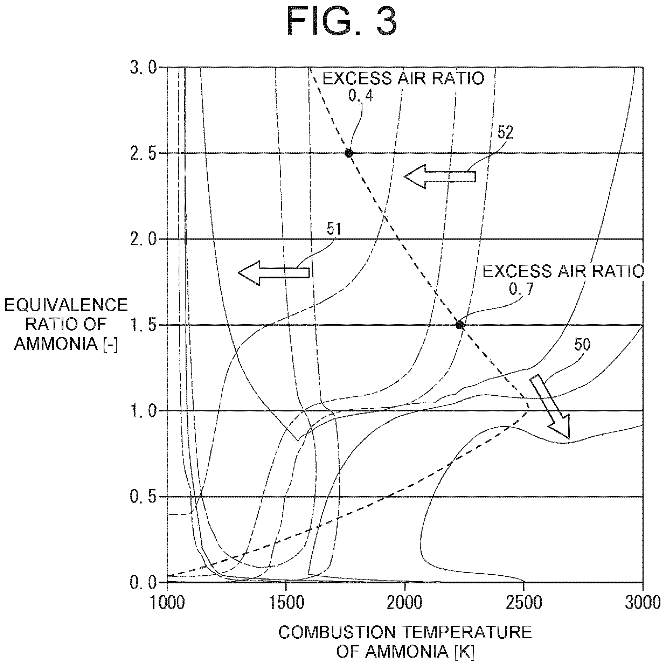

FIG. 3 shows the relationship between the equivalence ratio of ammonia in the first gas mixture supplied to the auxiliary combustion chamber 21 and the combustion temperature of ammonia. In FIG. 3, a map of a generation region of NO + NO₂ generated by the combustion of the first gas mixture with respect to the relationship between the equivalence ratio of ammonia and the combustion temperature is indicated by a solid line, and the generation amount of NO + NO₂ increases in a direction indicated by a white arrow 50. Further, in FIG. 3, a map of a generation region of N₂O generated by the combustion of the first gas mixture with respect to the relationship between the equivalence ratio of ammonia and the combustion temperature is indicated by a one dot chain line, and the generation amount of N₂O increases in a direction indicated by a white arrow 51. Further, in FIG. 3, a map of an appearance region of unburned NH₃ generated by the combustion of the first gas mixture with respect to the relationship between the equivalence ratio of ammonia and the combustion temperature is indicated by a two dot chain line, and the generation amount of unburned NH₃ increases in a direction indicated by a white arrow 52.

Further, in FIG. 3, in a case where the engine 1 is operated, the combustion temperature of ammonia when the first gas mixture is combusted with respect to the equivalence ratio of ammonia of the first gas mixture supplied to the auxiliary combustion chamber 21 is shown by a broken line graph. As shown in the line graph of FIG. 3, by setting the equivalence ratio of ammonia in the auxiliary combustion chamber 21 to 2.5 to 1.5, that is, by setting the excess air ratio of ammonia to 0.4 to 0.7, the generation of N₂O and NO + NO₂ in the auxiliary combustion chamber 21 can be avoided. Note that, at this excess air ratio, unburned NH₃ is produced, but this unburned NH₃ is reformed into H₂ in the combustion process.

Further, the fuel supply device 14 injects and supplies liquid fuel into the auxiliary combustion chamber 21 by the liquid fuel injector 28 in a state where the first gas mixture of ammonia and air is compressed and the temperature of the first gas mixture increases in the auxiliary combustion chamber 21, and combusts the first gas mixture of ammonia and air by compression self-ignition with the hydrocarbon-based liquid fuel. Specifically, in the combustion stroke of the combustion cycle, when the piston 12 is at the top dead center in a state where the intake port 23 and the exhaust port 24 are closed, the fuel supply device 14 supplies the liquid fuel to the auxiliary combustion chamber 21 by the liquid fuel injector 28 and ignites the first gas mixture of ammonia and air.

The engine 1 generates reformed fuel (for example, hydrogen) by decomposing and reforming ammonia by combusting ammonia in the auxiliary combustion chamber 21 in the combustion stroke of the combustion cycle, and generates fuel gas containing rich reformed fuel. The engine 1 can also generate reformed fuel (for example, hydrogen) by decomposing and reforming liquid fuel by combusting hydrocarbon-based liquid fuel in the auxiliary combustion chamber 21.

In addition, the engine 1 increases the pressure in the auxiliary combustion chamber 21 by the combustion of the first gas mixture containing ammonia, and injects and supplies the second gas mixture (fuel gas) containing the reformed fuel in the auxiliary combustion chamber 21 to the main combustion chamber 20 via the auxiliary chamber port 22. In the engine 1, when the piston 12 is lowered toward the bottom dead center in a state where the intake port 23 and the exhaust port 24 are closed in the combustion stroke of the combustion cycle, the fuel gas containing the generated reformed fuel is injected from the auxiliary combustion chamber 21 to the main combustion chamber 20 via the auxiliary chamber port 22. When the second gas mixture of the reformed fuel and air is generated in the main combustion chamber 20, oxygen in the air is spontaneously ignited by the reformed fuel which is rich and at a high temperature, and the second gas mixture of the reformed fuel and the air is combusted.

At this time, the fuel supply device 14 sets the supply amounts (for example, the supply pressure, the supply timing, and the supply period) of ammonia and liquid fuel so that the reformed fuel of the second gas mixture generated in the main combustion chamber 20 is mixed with the air in the main combustion chamber 20 and gradually becomes lean (excess air). For example, the fuel supply device 14 supplies ammonia and liquid fuel to the auxiliary combustion chamber 21 so that the excess air ratio of the reformed fuel becomes 1.8 or more.

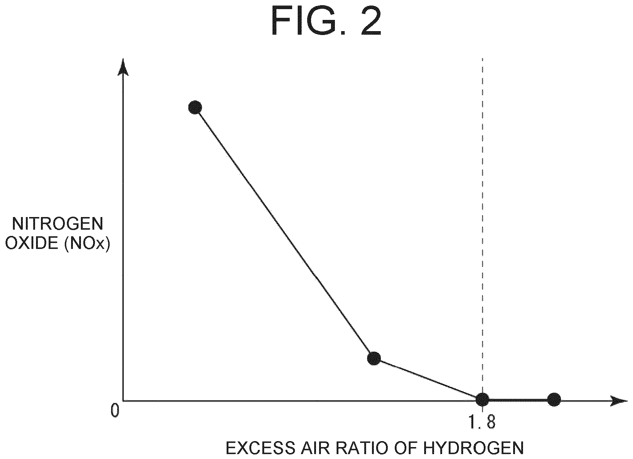

By combusting the second gas mixture containing the lean reformed fuel in the main combustion chamber 20, the combustion temperature in the main combustion chamber 20 is lowered, and the amount of nitrogen oxides generated in the exhaust gas is suppressed. FIG. 2 shows an example of the relationship between the excess air ratio of hydrogen in the second gas mixture generated in the main combustion chamber 20 and the amount of nitrogen oxides generated in the exhaust gas when the second gas mixture is combusted in the main combustion chamber 20. As shown in this example of the relationship, the amount of nitrogen oxides discharged decreases as the excess air ratio of hydrogen increases.

As described above, according to the present invention, the ammonia mixed combustion engine 1 that is operated by combusting ammonia and hydrocarbon-based liquid fuel includes the main combustion chamber 20, the auxiliary combustion chamber 21 that communicates with the main combustion chamber 20, and the fuel supply device 14 that supplies ammonia and liquid fuel to the auxiliary combustion chamber 21.

Thus, according to the ammonia mixed combustion engine 1 of the present invention, by supplying ammonia and hydrocarbon-based liquid fuel to the auxiliary combustion chamber 21, the first gas mixture rich in ammonia can be generated in the auxiliary combustion chamber 21, and ammonia can be uniformly combusted in the auxiliary combustion chamber 21.

Further, in the ammonia mixed combustion engine 1 of the present invention, the fuel supply device 14 includes the ammonia injector 27 for supplying ammonia and the liquid fuel injector 28 for supplying hydrocarbon-based liquid fuel as separate bodies. As a result, it is possible to realize a configuration where ammonia and hydrocarbon-based liquid fuel are separately supplied to the auxiliary combustion chamber 21.

Further, the ammonia mixed combustion engine 1 of the present invention generates reformed fuel such as hydrogen in the auxiliary combustion chamber 21 by combusting ammonia and/or hydrocarbon-based liquid fuel in the auxiliary combustion chamber 21. As a result, the reformed fuel generated in the auxiliary combustion chamber 21 is combusted in the main combustion chamber 20, so that combustion with the good exhaust gas property can be realized.

Further, the ammonia mixed combustion engine 1 of the present invention performs combustion at an excess air ratio of 0.4 to 0.7 in the auxiliary combustion chamber 21 to which ammonia is supplied. Thus, by decomposing rich ammonia immediately and generating reformed fuel such as hydrogen, and combusting the reformed fuel in the main combustion chamber 20, it is possible to suppress the generation of nitrous oxide (N₂O) (greenhouse gas that is 265 times as much as CO₂). Note that reformed fuel such as hydrogen can be generated in the auxiliary combustion chamber 21 by combusting hydrocarbon-based liquid fuel in the auxiliary combustion chamber 21. However, since soot or the like may be generated due to increased combustion of the liquid fuel, the generation of soot or the like can be suppressed by using rich ammonia.

Further, in the ammonia mixed combustion engine 1 of the present invention, the reformed fuel generated in the auxiliary combustion chamber 21 is supplied to the main combustion chamber 20, and combustion is performed at an excess air ratio in a lean state exceeding 1 in the main combustion chamber 20 to which the reformed fuel is supplied. For example, the excess air ratio in the main combustion chamber 20 is 1.8 or more. As a result, by combusting the second gas mixture containing the lean reformed fuel in the main combustion chamber 20, the combustion temperature in the main combustion chamber 20 can be lowered and the amount of nitrogen oxides generated in the exhaust gas can be suppressed.

Further, in the combustion cycle of the ammonia mixed combustion engine 1 of the present invention, hydrocarbon-based liquid fuel is supplied to the auxiliary combustion chamber 21 after ammonia is supplied to the auxiliary combustion chamber 21. At this time, in the combustion cycle, liquid fuel is supplied to the auxiliary combustion chamber 21 to cause combustion. As a result, the ammonia is combusted in a state where the ammonia is sufficiently mixed with air in the auxiliary combustion chamber 21, so that the ammonia can be combusted more uniformly in the auxiliary combustion chamber 21.

In the above-described embodiment, although the example in which the fuel supply device 14 includes the ammonia injector 27 and the liquid fuel injector 28 as separate bodies in order to separately supply ammonia and hydrocarbon-based liquid fuel to the auxiliary combustion chamber 21 has been described, the present invention is not limited to this example.

For example, the fuel supply device 14 may be configured to include an integrated two-fuel injector that supplies ammonia and hydrocarbon-based liquid fuel. For example, the two-fuel injector may be configured to include a first valve chamber for supplying ammonia and a second valve chamber for supplying liquid fuel in a single valve body so that ammonia and liquid fuel can be separately supplied by opening and closing valve bodies provided in the respective valve chambers. Alternatively, the two-fuel injector is configured to include a first passage for supplying ammonia and a second passage for supplying liquid fuel in one valve body, and include an injection hole communicating with each of the passages so that ammonia and liquid fuel can be separately supplied by switching between the first passage and the second passage with respect to the injection hole.

In the above-described embodiment, although the example in which the second gas mixture is the gas mixture of reformed fuel and air has been described, the present invention is not limited to this example. The second gas mixture may be a gas mixture containing unreformed ammonia or hydrocarbon-based fuel in addition to reformed fuel and air.

It should be noted that the present invention can be appropriately modified without departing from the gist or idea of the invention that can be read from the claims and the entire specification, and an ammonia mixed combustion engine with such modifications is also included in the technical idea of the present invention.

### [Appendix of Invention]

Hereinafter, the overview of the invention extracted from the above-described embodiment will be appended. Configurations and processing functions described in the following Appendixes can be appropriately selected and combined.

### <Appendix 1>

An ammonia mixed combustion engine operated by combusting ammonia and hydrocarbon-based liquid fuel, comprising:
a main combustion chamber;
an auxiliary combustion chamber that communicates with the main combustion chamber; and
a fuel supply device that supplies the ammonia and the liquid fuel to the auxiliary combustion chamber.

### <Appendix 2>

The ammonia mixed combustion engine according to Appendix 1, wherein the fuel supply device comprises an ammonia injector that supplies the ammonia and a liquid fuel injector that supplies the liquid fuel.

### <Appendix 3>

The ammonia mixed combustion engine according to Appendix 1, wherein the fuel supply device comprises a two-fuel injector that supplies the ammonia and the liquid fuel.

### <Appendix 4>

The ammonia mixed combustion engine according to any one of Appendixes 1 to 3, wherein reformed fuel is generated in the auxiliary combustion chamber by combusting the ammonia and/or the liquid fuel in the auxiliary combustion chamber.

### <Appendix 5>

The ammonia mixed combustion engine according to any one of Appendixes 1 to 4, wherein combustion is performed at an excess air ratio of 0.4 to 0.7 in the auxiliary combustion chamber to which the ammonia is supplied.

### <Appendix 6>

The ammonia mixed combustion engine according to Appendix 4 or 5, wherein the reformed fuel generated in the auxiliary combustion chamber is supplied to the main combustion chamber, and combustion is performed at an excess air ratio in a lean state exceeding 1 in the main combustion chamber to which the reformed fuel is supplied.

### <Appendix 7>

The ammonia mixed combustion engine according to Appendix 6, wherein an excess air ratio in the main combustion chamber is 1.8 or more.

### <Appendix 8>

The ammonia mixed combustion engine according to any one of Appendixes 1 to 7, wherein in a combustion cycle, the liquid fuel is supplied to the auxiliary combustion chamber after the ammonia is supplied to the auxiliary combustion chamber.

### <Appendix 9>

The ammonia mixed combustion engine according to Appendix 8, wherein in a combustion cycle, combustion is generated by supplying the liquid fuel to the auxiliary combustion chamber.

### REFERENCE SIGNS LIST

1 ammonia mixed combustion engine
2 control device
3 intake passage
4 exhaust passage
10 cylinder
11 cylinder body
12 piston
13 cylinder head
14 fuel supply device
15 connecting rod
16 crankshaft
20 main combustion chamber
21 auxiliary combustion chamber
22 auxiliary chamber port
23 intake port
24 exhaust port
25 intake valve
26 exhaust valve
27 ammonia injector
28 liquid fuel injector
29 ammonia tank
30 liquid fuel tank

## Claims

1. An ammonia mixed combustion engine operated by combusting ammonia and hydrocarbon-based liquid fuel, comprising:
a main combustion chamber;
an auxiliary combustion chamber that communicates with the main combustion chamber; and
a fuel supply device that supplies the ammonia and the liquid fuel to the auxiliary combustion chamber.

2. The ammonia mixed combustion engine according to claim 1, wherein the fuel supply device comprises an ammonia injector that supplies the ammonia and a liquid fuel injector that supplies the liquid fuel.

3. The ammonia mixed combustion engine according to claim 1, wherein the fuel supply device comprises a two-fuel injector that supplies the ammonia and the liquid fuel.

4. The ammonia mixed combustion engine according to claim 1, wherein reformed fuel is generated in the auxiliary combustion chamber by combusting the ammonia and/or the liquid fuel in the auxiliary combustion chamber.

5. The ammonia mixed combustion engine according to claim 1, wherein combustion is performed at an excess air ratio of 0.4 to 0.7 in the auxiliary combustion chamber to which the ammonia is supplied.

6. The ammonia mixed combustion engine according to claim 4, wherein the reformed fuel generated in the auxiliary combustion chamber is supplied to the main combustion chamber, and combustion is performed at an excess air ratio in a lean state exceeding 1 in the main combustion chamber to which the reformed fuel is supplied.

7. The ammonia mixed combustion engine according to claim 6, wherein an excess air ratio in the main combustion chamber is 1.8 or more.

8. The ammonia mixed combustion engine according to claim 1, wherein in a combustion cycle, the liquid fuel is supplied to the auxiliary combustion chamber after the ammonia is supplied to the auxiliary combustion chamber.

9. The ammonia mixed combustion engine according to claim 8, wherein in a combustion cycle, combustion is generated by supplying the liquid fuel to the auxiliary combustion chamber.
